# FASCICULE DE BREVET EUROPEEN

(11) **EP 3 011 156 B1**
(45) Date de publication et mention de la délivrance du brevet: **27.12.2017**
(21) Numéro de dépôt: 14736900.3
(22) Date de dépôt: 12.06.2014
(51) Int. Cl.: F02C 7/32, F02C 7/36, B01D 50/00, F01D 25/12, B64D 33/00, F01M 13/04

(54) **BOITIER D'ACCESSOIRES DE TURBOMACHINE EQUIPE D'UN SEPARATEUR AIR/HUILE**
HILFSGETRIEBE FÜR TURBOMASCHINE MIT EINEM LUFT/ÖL-ABSCHEIDER
TURBOMACHINE ACCESSORY GEARBOX EQUIPPED WITH AN AIR/OIL SEPARATOR

(30) Priorité: 21.06.2013 FR 1355942
(43) Date de publication de la demande: 27.04.2016
(73) Titulaire: Safran Transmission Systems, 92700 Colombes (FR)
(72) Inventeur: PRUNERA-USACH, Stéphane, 14197 Berlin (DE); MORELLI, Boris, F-75014 Paris (FR); PELTIER, Jordane, F-75003 Paris (FR)
(74) Mandataire: Gevers & Orès
(86) Numéro de dépôt international: PCT/FR2014/051447
(87) Numéro de publication internationale: WO 2014/202874

(56) Documents cités:
- EP-A2- 2 592 252
- US-A- 5 716 423

## Description

### DOMAINE TECHNIQUE

La présente invention concerne un boîtier d'accessoires pour une turbomachine, ce boîtier d'accessoires aussi appelé AGB (acronyme de *Accessory Gear Box*) étant doté d'un équipement et en particulier d'un séparateur air/huile.

### ETAT DE L'ART

La recherche continue de la performance d'un moteur aéronautique pousse à intégrer le boîtier d'accessoires dans un environnement de plus en plus contraint. L'encombrement global d'un boîtier d'accessoires participe à la performance globale du moteur. Il devient donc nécessaire de réduire l'encombrement du boîtier d'accessoires et de ses équipements.

Un boîtier d'accessoires pour une turbomachine est destiné à transmettre une puissance mécanique originaire de la turbomachine à des équipements tels qu'une pompe, un séparateur air/huile, un générateur d'électricité, etc. Le boîtier d'accessoires comporte des pignons engrenés les uns avec les autres et dont au moins certains sont solidaires de queues coaxiales destinées à entraînées en rotation des parties mobiles ou rotors des équipements.

Dans la technique actuelle, la queue précitée de chaque pignon du boîtier traverse un orifice du carter du boîtier d'accessoires et entraîne en rotation la partie tournante de l'équipement, à l'extérieur du boîtier d'accessoires.

Dans le cas où l'équipement est un séparateur air/huile, un mélange d'air et d'huile est introduit dans le séparateur qui est destiné à mettre en rotation le mélange afin de séparer l'huile de l'air par effet centrifuge. L'air séparé de l'huile est ensuite destiné à passer au travers d'une membrane filtrante qui est mise en rotation par la queue du pignon et qui retient les dernières gouttelettes d'huile contenues dans l'air, l'air filtré étant ensuite acheminé vers une sortie d'air du séparateur. La queue du pignon, qui coopère avec l'équipement, est guidée en rotation par des paliers exclusivement montés dans le boîtier d'accessoires.

Cependant, cette technologie n'est pas satisfaisante car le boîtier et l'équipement sont trop encombrants, ce qui rend difficile leur intégration dans la turbomachine. US5716423 divulgue les caractéristiques du préambule de la revendication 1. L'invention permet d'apporter une solution simple, efficace et économique à ce problème

### EXPOSE DE L'INVENTION

L'invention propose un boîtier d'accessoires pour une turbomachine, ce boîtier étant doté d'un séparateur air/huile et comportant un carter dans lequel sont montés des pignons engrenés les uns avec les autres et dont un est solidaire d'une queue coaxiale d'entraînement d'au moins une membrane filtrante du séparateur, caractérisé en ce que cette membrane filtrante est montée directement sur un voile du pignon, à l'intérieur du carter.

Selon l'invention, une partie de l'équipement (séparateur air/huile) est logée dans le carter du boîtier d'accessoires, c'est-à-dire est intégrée au boîtier d'accessoires. Cela est réalisé par le fait que la partie tournante (membrane filtrante) de l'équipement est au moins en partie logée dans ce carter. Autrement dit, par opposition à la technique antérieure dans laquelle la partie tournante était située à l'extérieur du boîtier d'accessoires, la partie tournante est ici logée à l'intérieur du boîtier. Ceci permet de simplifier l'équipement, par exemple en supprimant l'arbre d'entraînement de la partie tournante de l'équipement de la technique antérieure, ainsi que ses paliers de guidage (dans le cas d'un séparateur air/huile, la partie tournante peut déjà être supportée par des paliers de transmission), et se traduit par un gain de masse et une réduction significative de l'encombrement axial du boîtier et de l'équipement (l'axe considéré étant ici l'axe de rotation de la queue de pignon et de la partie tournante de l'équipement).

Selon l'invention, l'équipement est un séparateur air/huile et sa partie tournante comporte une membrane filtrante montée directement sur un voile du pignon, à l'intérieur du carter. La partie tournante de l'équipement peut ainsi être guidée en rotation par les paliers de guidage du pignon, ce qui permet d'améliorer la fiabilité de l'ensemble. La membrane peut être appliquée et fixée sur le pignon.

Le pignon peut comprendre une denture reliée à la queue du pignon par des bras, par exemple radiaux, formant le voile précité et définissant entre eux des ouvertures de passage d'air circulant dans le séparateur.

La membrane peut être montée axialement en amont du voile et être destinée à être traversée par un mélange d'air et d'huile et à retenir l'huile de ce mélange.

Le séparateur peut comprendre un carter entourant au moins une partie de la queue du pignon et définissant une cavité interne sensiblement cylindrique, et une ou plusieurs entrées d'un mélange d'air et d'huile sensiblement tangentielles dans la cavité.

Le carter peut comprendre sur sa surface interne au moins une ailette hélicoïdale de mise en rotation du mélange d'air et d'huile introduit dans la cavité pour la séparation par effet centrifuge d'au moins une partie de l'huile de l'air du mélange.

La queue peut être sensiblement tubulaire et comprendre sur sa paroi tubulaire des orifices radiaux de passage d'air après filtration par la membrane.

Un palier de guidage de la queue du pignon est de préférence monté entre la queue et un rebord cylindrique d'un support du séparateur, tel qu'un support de roulement.

La présente invention concerne également une turbomachine, telle qu'un turboréacteur, un turbopropulseur ou un turbomoteur d'avion ou d'hélicoptère, caractérisée en ce qu'elle comprend un boîtier tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue très schématique d'un boîtier d'accessoires de turbomachine, sur lequel sont montés deux équipements ;
- la figure 2 est une vue très schématique partielle en coupe axiale d'un boîtier d'accessoires équipé d'un séparateur air/huile, et représente la technique antérieure à l'invention ;
- la figure 3 est une vue très schématique partielle en coupe axiale d'un boîtier d'accessoires équipé d'un séparateur air/huile, et représente l'invention ; et
- les figures 4 à 7 sont des vues schématiques partielles en perspective, et certaines en coupe axiale, d'un boîtier d'accessoires et d'un séparateur air/huile, selon un mode de réalisation de l'invention.

### DESCRIPTION DETAILLEE

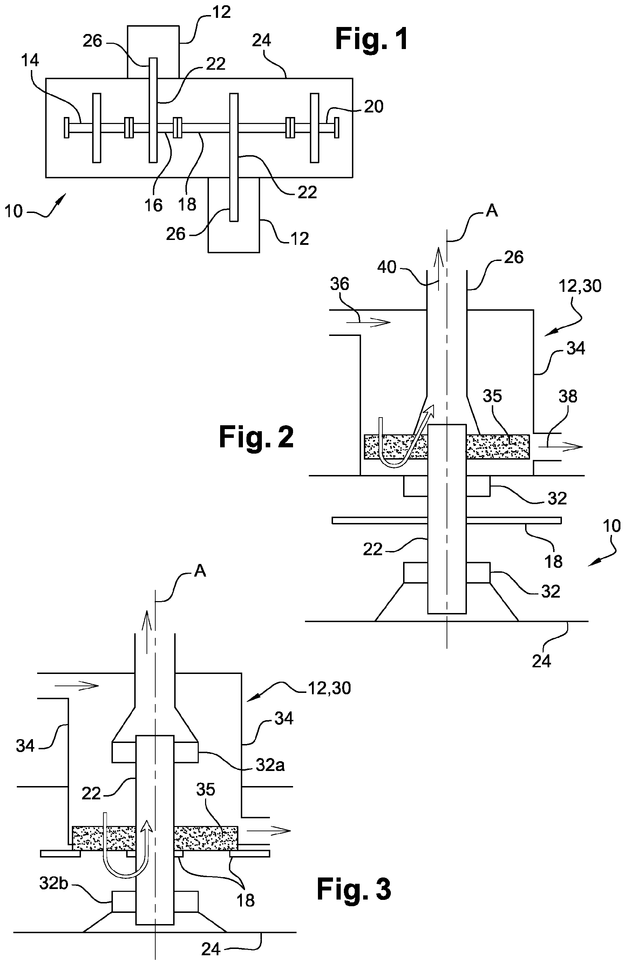

On se réfère d'abord à la figure 1 qui représente de manière très schématique un boîtier d'accessoires 10 pour une turbomachine, telle qu'un turboréacteur, un turbopropulseur ou un turbomoteur d'avion ou d'hélicoptère, ce boîtier 10 étant équipé d'accessoires ou d'équipements 12 qui sont au nombre de deux dans l'exemple représenté.

Le boîtier d'accessoires 10 est destiné à transmettre une puissance mécanique originaire de la turbomachine par l'intermédiaire d'un arbre radial sortant de celle-ci, et à le transmettre aux équipements qui sont des pompes, des séparateurs air/huile, des générateurs d'électricité, etc. La transmission s'effectue par une chaîne cinématique composée de pignons 14, 16, 18, 20 successifs, qui sont au nombre de quatre dans l'exemple représenté.

Les pignons 16 et 20 comportent chacun une queue 22 coaxiale, qui est formée d'une seule pièce avec le pignon correspondant, et qui traverse un orifice du carter 24 du boîtier d'accessoires. La partie d'extrémité de la queue 22 d'un pignon, située à l'extérieur du boîtier 10, permet d'entraîner en rotation la partie tournante de l'équipement 12 correspondant.

La figure 2 est vue très schématique à plus grande échelle de la queue 22 d'un pignon 18 d'un équipement 12, qui est ici un séparateur air/huile 30.

La queue 22 du pignon est centrée et guidée en rotation par des paliers 32 qui sont montés dans le carter 24 du boîtier d'accessoires 10. L'équipement comprend un conduit 26 fixe coaxial au pignon 18.

Le séparateur air/huile 30 comprend un carter cylindrique 34 qui porte le conduit 26 et entoure la membrane 35, et à l'intérieur duquel est introduit de manière tangentielle un mélange d'air et d'huile (flèche 36), ce mélange est destiné à être mis en rotation dans le carter 34 afin de séparer par effet centrifuge l'huile de l'air du mélange, l'air appauvri en huile étant ensuite destiné à traverser la membrane 35 pour que cette dernière retienne les gouttelettes d'huile restantes dans cet air. L'huile récupérée est évacuée (flèche 38) et l'air séparé de l'huile est acheminé via le conduit 26 jusqu'à une sortie d'air du séparateur (flèche 40).

La technologie représentée en figure 2, qui représente la technique antérieure, a l'inconvénient d'être encombrante axialement (axe A). L'invention, schématiquement représentée en figure 3, permet de remédier à ce problème grâce à l'intégration d'une partie de l'équipement 12, à savoir le séparateur 30 dans l'exemple précité, dans le carter 24 du boîtier d'accessoires.

Ceci est rendu possible par le logement de la partie tournante de l'équipement dans le carter 24 du boîtier. De plus, l'exemple de réalisation décrit dans ce qui suit permet l'utilisation de constituants d'un pignon dans le fonctionnement de l'équipement, notamment la fixation de la membrane filtrante directement sur le voile du pignon et l'évacuation de l'air directement sur la queue tubulaire du pignon.

En figure 3, la membrane filtrante 35 du séparateur 30 est en effet logée dans le carter 24 et fixée sur le pignon 18. Une partie du carter 34 du séparateur est logée à l'intérieur du volume du carter 24 du boîtier d'accessoires 10 et sert en outre de support à un premier palier 32a de guidage de la queue 22, un autre palier 32b de guidage de la queue étant porté par le carter 24 du boîtier d'accessoires 10.

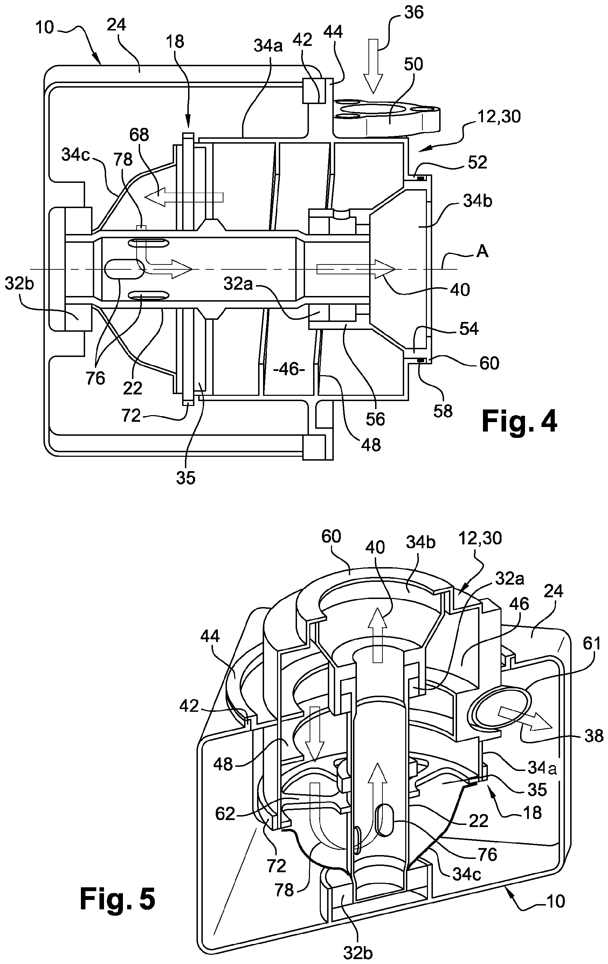

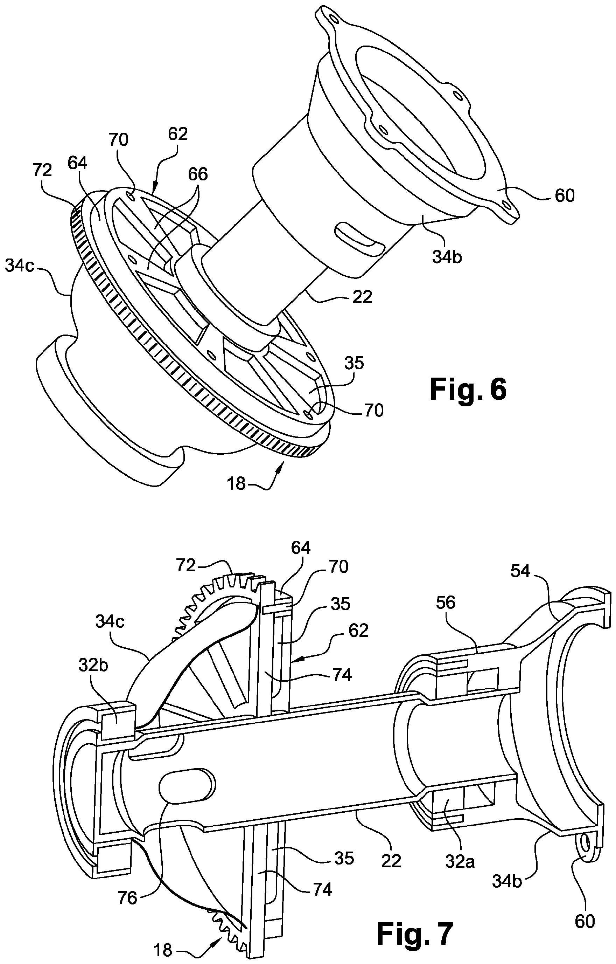

On se réfère maintenant aux figures 4 à 7 qui représentent un exemple plus concret de réalisation de l'invention, et dans lesquelles les éléments déjà décrits dans ce qui précède sont désignés par les mêmes références.

Le carter 24 du boîtier d'accessoires 10 a en section une forme sensiblement rectangulaire, ce carter comportant sur une de ses parois une ouverture 42 à contour sensiblement circulaire de montage du séparateur air/huile 30.

Le séparateur 30 comprend un premier carter 34a sensiblement cylindrique qui traverse l'ouverture 42 du carter 24 et comprend une bride annulaire 44 radialement externe (par rapport à l'axe A) de fixation du séparateur 30 sur le carter 24, cette bride 44 étant appliquée et fixée par des moyens du type vis-écrou (non représentés) sur le bord périphérique de l'ouverture 42.

Le carter 34a s'étend autour d'une partie de la queue 22 du pignon 18 et définit autour de celle-ci une cavité annulaire 46 de circulation d'un mélange d'air et d'huile. Le carter 34a comprend sur sa surface cylindrique interne au moins une ailette hélicoïdale interne 48 de mise en rotation de ce mélange autour de la queue 22.

Le séparateur 30 comprend à son extrémité située à l'extérieur du carter 24 un premier conduit 50 d'introduction du mélange air/huile (flèche 36), ce conduit 50 étant solidaire du premier carter 34a et son passage radialement interne débouchant à l'intérieur de la cavité 46 du carter 34a. L'axe longitudinal du conduit 50 est orienté tangentiellement par rapport à une circonférence centrée sur l'axe A de façon à faciliter la mise en rotation du mélange dans la cavité, le mélange air/huile étant destiné à tourner autour de l'axe A et à se déplacer le long de cet axe depuis l'extérieur vers l'intérieur du boîtier 10 (de la droite vers la gauche en figure 4).

Le séparateur 30 comprend également un deuxième conduit 61 d'évacuation de l'huile séparée de l'air par effet centrifuge (flèche 38), cette huile se déposant sur la surface interne du carter 34a et s'écoulant ensuite dans le passage interne du conduit 61 qui a également une orientation tangentielle par rapport à une circonférence centrée sur l'axe A. Le deuxième conduit 61 est solidaire du carter 34a et est ici logée à l'intérieur du carter 24 du boîtier 10 (figure 5).

Le carter 34a comprend à son extrémité située à l'extérieur du boîtier 10 un rebord cylindrique 52 de montage d'un support de roulement 34b du séparateur. Ce support 34b définit une sortie d'air du séparateur 30 après filtration du mélange précité (flèche 40). Ce support 34b a une forme annulaire et comprend une paroi tronconique dont les extrémités sont reliées respectivement à des rebords cylindriques 54, 56, le rebord 54 situé du côté opposé au boîtier 10 étant monté dans le rebord 52 du carter 34a et fixé à celui-ci, et l'autre rebord 56 entourant la partie d'extrémité de la queue 22 s'étendant à l'extérieur du carter 24 du boîtier 10.

Un joint annulaire d'étanchéité 58 est monté entre les rebords 52, 54 et le rebord 54 est relié à une extrémité à une bride annulaire externe 60 de fixation par des moyens du type vis-écrou (non représentés) sur le carter 34a.

Le palier de guidage 32a est monté entre le rebord 56 du support 34b et la partie d'extrémité précitée de la queue 22. L'autre palier 32b de guidage de la queue 22 est monté à l'extrémité opposée de la queue, et est fixé sur le carter 24 du boîtier 10.

Le carter 34a et le support 34b sont fixes et forment le stator du séparateur 30. L'extrémité du carter 34a, opposée au conduit 50 et au support 34b, entoure un disque 62 de support de la membrane filtrante 35, ce disque étant monté et fixé sur le voile du pignon et formant, avec la membrane filtrante 35, le pignon 18 et sa queue 22, le rotor du séparateur 30. La membrane 35 comprend par exemple un bloc de matière alvéolaire telle qu'une mousse.

Le disque 62 comprend un moyeu fixé sur le voile du pignon, une couronne annulaire 64 entourant le moyeu, et des bras radiaux 66 de liaison du moyeu à la couronne. Les bras 66 définissent entre eux des ouvertures axiales de passage de l'air circulant dans la cavité 46 et qui a été appauvri en huile par effet centrifuge (flèche 68), comme expliqué dans ce qui précède.

En fonctionnement, le disque 62 tourne à l'intérieur du carter 34a, celui-ci glissant sur la périphérie externe de la couronne 64 du disque 62. Une étanchéité dynamique (comprenant par exemple des gorges ou rainures) peut être prévue entre le carter 34a et la couronne 64 et/ou entre la queue 22 et le support de roulement 34b.

Le disque 62 est monté en amont du pignon 18 (par rapport à la direction d'écoulement de l'air - flèche 68) et est fixé à celui-ci par des vis 70 qui traversent des orifices axiaux de la couronne 64 du disque et du pignon 18.

Le pignon 18 est formé d'une seule pièce avec la queue 22 et comprend une denture externe 72 qui est reliée à la queue par un voile formé de bras radiaux 74 qui définissent entre eux des ouvertures axiales de passage de l'air précité (flèche 68). Les bras 66, 74 du disque et du pignon sont sensiblement alignés axialement. La denture 72 du pignon 18 est destinée à être engrenée avec une denture d'un autre pignon de la boîte d'accessoires 10.

Le séparateur comprend en outre un couvercle 34c mobile, c'est-à-dire faisant partie de son rotor. Ce couvercle 34c est monté dans le carter 24 de la boîte et a une forme annulaire s'étendant autour de la queue 22. Il a une forme sensiblement tronconique et est monté en aval de la membrane 35 et du pignon 18, son extrémité amont de plus grand diamètre étant fixée à la périphérie externe du pignon 18 et son extrémité aval de plus petit diamètre étant fixée à la queue 22. Dans l'exemple représenté, les vis 70 de fixation du disque 62 traversent le pignon et sont vissées dans des orifices taraudés du couvercle 34c.

Ce couvercle 34c définit une enceinte annulaire autour de la queue 22 et en aval de la membrane 35 et du pignon 18, cette enceinte étant alimentée avec l'air séparé de l'huile, c'est-à-dire l'air filtré sortant de la membrane 35 qui est destinée à retenir les gouttelettes d'huile contenues dans l'air qui la traverse.

Le couvercle 34c entoure une partie de la queue 22 qui est tubulaire et qui comporte des orifices radiaux 76 traversants de passage de l'air filtré radialement à l'intérieur de la queue (flèche 78). L'air qui pénètre dans la queue 22 est destiné à s'écouler à l'intérieur de la queue d'aval en amont (de la gaude vers la droite en figure 4) jusqu'à l'extrémité amont ouverte de la queue de façon à ce que cet air soit évacué par la sortie du séparateur 30 définie par le support 34b (flèche 40).

## Revendications

1. Boîtier d'accessoires (10) pour une turbomachine, ce boîtier étant doté d'un séparateur air/huile (12) et comportant un carter (24) dans lequel sont montés des pignons (14-20) engrenés les uns avec les autres et dont un (18) est solidaire d'une queue (22) coaxiale d'entraînement d'au moins une membrane filtrante (35) du séparateur, **caractérisé en ce que** cette membrane filtrante est montée directement sur un voile du pignon (18), à l'intérieur du carter.

2. Boîtier d'accessoires (10) selon la revendication 1, **caractérisé en ce que** la membrane (35) est appliquée et fixée sur le pignon (18).

3. Boîtier d'accessoires (10) selon la revendication 1 ou 2, **caractérisé en ce que** le pignon (18) comprend une denture (72) reliée à la queue (22) par des bras (66) qui forment le voile précité et définissent entre eux des ouvertures de passage d'air circulant dans le séparateur (12).

4. Boîtier d'accessoires (10) selon la revendication 3, **caractérisé en ce que** la membrane (35) est montée axialement en amont du pignon (18) et est destinée à être traversée par un mélange d'air et d'huile et à retenir l'huile de ce mélange.

5. Boîtier d'accessoires (10) selon l'une des revendications 1 à 4, **caractérisé en ce que** le séparateur (12) comprend un carter (34a) entourant au moins une partie de la queue (22) du pignon (18) et définissant une cavité interne (46) sensiblement cylindrique, et une ou plusieurs entrées d'un mélange d'air et d'huile sensiblement tangentielles dans la cavité.

6. Boîtier d'accessoires (10) selon la revendication 5, **caractérisé en ce que** le carter (34a) comprend sur sa surface interne au moins une ailette hélicoïdale (48) de mise en rotation du mélange d'air et d'huile introduit dans la cavité (46) pour la séparation par effet centrifuge d'au moins une partie de l'huile de l'air du mélange.

7. Boîtier d'accessoires (10) selon l'une des revendications 1 à 6, **caractérisé en ce que** la queue (22) du pignon (18) est sensiblement tubulaire et comprend sur sa paroi tubulaire des orifices radiaux (76) de passage d'air après filtration par la membrane (35).

8. Boîtier d'accessoires (10) selon l'une des revendications 1 à 7, **caractérisé en ce qu'**un palier (32a) de guidage de la queue (22) du pignon (18) est monté entre la queue et un rebord cylindrique (56) d'un support (34b) du séparateur (12).

9. Turbomachine, telle qu'un turboréacteur, un turbopropulseur ou turbomoteur d'avion ou d'hélicoptère, **caractérisée en ce qu'**elle comprend un boîtier d'accessoires (10) selon l'une des revendications précédentes.

## Patentansprüche

1. Hilfsgetriebe (10) für eine Turbomaschine, wobei dieses Getriebe mit einem Luft/Öl-Abscheider (12) ausgestattet ist und ein Gehäuse (24) umfasst, in dem Zahnräder (14-20) montiert sind, die miteinander eingreifen und von denen eines (18) fest mit einem koaxialen Antriebsschaft (22) von mindestens einer Filtermembran (35) des Abscheiders verbunden ist, **dadurch gekennzeichnet, dass** diese Filtermembran direkt an einer Scheibenseite des Zahnrads (18) im Inneren des Gehäuses montiert ist.

2. Hilfsgetriebe (10) nach Anspruch 1, **dadurch gekennzeichnet, dass** die Membran (35) an dem Zahnrad (18) angebracht und befestigt ist.

3. Hilfsgetriebe (10) nach Anspruch 1 oder 2, **dadurch gekennzeichnet, dass** das Zahnrad (18) eine Verzahnung (72) umfasst, die mit dem Schaft (22) durch Arme (66) verbunden ist, die die vorstehend genannte Scheibenseite bilden und zwischen sich Durchlassöffnungen für Luft bilden, die in dem Abscheider (12) zirkuliert.

4. Hilfsgetriebe (10) nach Anspruch 3, **dadurch gekennzeichnet, dass** die Membran (35) axial stromaufwärts des Zahnrads (18) montiert ist und dazu bestimmt ist, von einem Gemisch aus Luft und Öl durchströmt zu werden und das Öl aus diesem Gemisch zurückzuhalten.

5. Hilfsgetriebe (10) nach einem der Ansprüche 1 bis 4, **dadurch gekennzeichnet, dass** der Abscheider (12) ein Gehäuse (34a) umfasst, das mindestens einen Teil des Schaftes (22) des Zahnrads (18) umgibt und einen im Wesentlichen zylindrischen Innenhohlraum (46) definiert, und einen oder mehrere im Wesentlichen tangentiale Eingänge für ein Gemisch aus Luft und Öl in den Hohlraum.

6. Hilfsgetriebe (10) nach Anspruch 5, **dadurch gekennzeichnet, dass** das Gehäuse (34a) an seiner Innenfläche mindestens eine schraubenförmige Rippe (48) zum In-Drehung-Versetzen des in den Hohlraum (46) eingebrachten Gemisches aus Luft und Wasser umfasst für das Abscheiden von mindestens einem Teil des Öls von der Luft des Gemisches durch Zentrifugalwirkung.

7. Hilfsgetriebe (10) nach einem der Ansprüche 1 bis 6, **dadurch gekennzeichnet, dass** der Schaft (22) des Zahnrads (18) im Wesentlichen rohrförmig ist und an seiner rohrförmigen Wand radiale Öffnungen (76) für den Durchlass von Luft nach Filtration durch die Membran (35) umfasst.

8. Hilfsgetriebe (10) nach einem der Ansprüche 1 bis 7, **dadurch gekennzeichnet, dass** ein Führungslager (32a) des Schaftes (22) des Zahnrads (18) zwischen dem Schaft und einem zylindrischen Flansch (56) eines Trägers (34b) des Abscheiders (12) montiert ist.

9. Turbomaschine, wie ein Turbostrahltriebwerk, ein Turboproptriebwerk oder ein Turbomotor eines Flugzeugs oder Hubschraubers, **dadurch gekennzeichnet, dass** sie ein Hilfsgetriebe (10) nach einem der vorstehenden Ansprüche umfasst.

## Claims

1. Accessory gearbox (10) for a turbine engine, said gearbox being provided with an air/oil separator (12) and comprising a casing (24) in which intermeshing pinions (14-20) are mounted, one (18) of which is rigidly connected to a coaxial shank (22) for driving at least one filtering membrane (35) of the separator, **characterised in that** said filtering membrane is directly mounted on a web of the pinion (18), inside the casing.

2. Accessory gearbox (10) according to claim 1, **characterised in that** the membrane (35) is applied and fixed to the pinion (18).

3. Accessory gearbox (10) according to either claim 1 or claim 2, **characterised in that** the pinion (18) comprises teeth (72) connected to the shank (22) by arms (66) that form the aforementioned web and define therebetween openings for the passage of air circulating in the separator (12).

4. Accessory gearbox (10) according to claim 3, **characterised in that** the membrane (35) is mounted axially upstream of the pinion (18) and is intended to have a mixture of air and oil pass through it and to retain the oil of this mixture.

5. Accessory gearbox (10) according to any of claims 1 to 4, **characterised in that** the separator (12) comprises a casing (34a) surrounding at least part of the shank (22) of the pinion (18) and defining a substantially cylindrical internal cavity (46), and one or more inlets for a mixture of air and water that are substantially tangential in the cavity.

6. Accessory gearbox (10) according to claim 5, **characterised in that** the casing (34a) comprises, on the internal surface thereof, at least one helical fin (48) for setting the mixture of air and water introduced into the cavity (46) into rotation in order to separate by centrifugal effect at least part of the oil from the air in the mixture.

7. Accessory gearbox (10) according to any of claims 1 to 6, **characterised in that** the shank (22) of the pinion (18) is substantially tubular and comprises, on the tubular wall thereof, radial orifices (76) for air to pass through after filtration by the membrane (35).

8. Accessory gearbox (10) according to any of claims 1 to 7, **characterised in that** a guide bearing (32a) of the shank (22) of the pinion (18) is mounted between the shank and a cylindrical rim (56) of a support (34b) of the separator (12).

9. Turbine engine, such as a turbojet engine, a turboprop engine or a turbine engine of an aeroplane or helicopter, **characterised in that** it comprises an accessory gearbox (10) according to any of the preceding claims.
